# EUROPÄISCHE PATENTSCHRIFT

(11) **EP 3 031 560 B1**
(45) Veröffentlichungstag und Bekanntmachung des Hinweises auf die Patenterteilung: **20.08.2025**
(21) Anmeldenummer: 15195282.7
(22) Anmeldetag: 19.11.2015
(51) Int. Cl.: B23C 5/10, B27G 13/04, B23C 5/20

(54) **BEARBEITUNGSWERKZEUG UND SCHNEIDPLATTE FÜR DAS BEARBEITUNGSWERKZEUG**
MACHINING TOOL AND CUTTING PLATE FOR THE MACHINING TOOL
OUTIL D'USINAGE ET PLAQUE DE COUPE POUR L'OUTIL D'USINAGE

(30) Priorität: 09.12.2014 CH 19002014
(43) Veröffentlichungstag der Anmeldung: 15.06.2016
(73) Patentinhaber: Oertli Werkzeuge AG, 8181 Höri bei Bülach (CH)
(72) Erfinder: Ehrle, Bruno, 8212 Neuhausen (CH)
(74) Vertreter: Swisspat Riederer Hasler Patentanwälte AG

(56) Entgegenhaltungen:
- EP-A1- 1 442 852
- CN-U- 203 391 062
- FR-A1- 2 702 403
- US-A- 3 742 565
- US-A1- 2008 050 185
- US-A1- 2016 199 997

## Beschreibung

Die Erfindung betrifft ein Bearbeitungswerkzeug gemäss Oberbegriff von Anspruch 1 insbesondere für Holz oder holzartige Werkstoffe, Kunststoffe und/oder Verbundwerkstoffe und eine Schneidplatte für das Bearbeitungswerkzeug gemäß dem Oberbegriff von Anspruch 15. Ein solches Bearbeitungswerkzeug und eine solche Schneidplatte sind aus dem Dokument US3742565 A bekannt.

### Stand der Technik

Bei der zerspanenden Bearbeitung von Werkstoffen, insbesondere Holz, wird im Allgemeinen eine nacharbeitsfreie glatte Oberfläche angestrebt. Um dies zu erreichen, muss die Schneidengeometrie des Bearbeitungswerkzeuges optimiert werden. Gerade bei der Bearbeitung von Holz oder holzartigen Werkstoffen sind aber verschiedene nachteilige Effekte zu beobachten, die die Qualität der bearbeiteten Oberfläche beeinträchtigen. Bei der Zerspanung von Holz kann beispielsweise die sogenannte Vorspaltung auftreten, wenn der Schneide beim Abnehmen eines Spanes in Faserrichtung ein als Vorspaltung bezeichneter Riss vorauseilt. Diese Vorspaltung erleichtert zwar die Bearbeitung und verlängert die Standzeit der Schneide, führt aber auch zu einer unerwünscht rauen Oberfläche. Ausserdem kann es zu einem Wiederaufstellen der Werkstückfasern nach dem Trennen kommen, wenn die Holzoberfläche mit z. B. wasserlöslichen Lacken behandelt wird.

Um trotz dieser Effekte eine möglichst glatte und nacharbeitsfreie Oberfläche zu erzielen, muss die Werkzeugschneidkante eine möglichst geringe Schneidkantenverrundung und einen kleinen Keilwinkel aufweisen. Insbesondere der Keilwinkel unterliegt aber der Einschränkung, dass ein bestimmter Wert bei verschiedenen Schneidenwerkstoffen nicht unterschritten werden darf. Bei einem zu geringen Keilwinkel kommt es schon zu Beginn der Bearbeitung zu einer Abstumpfung der Schneidenkante mit einer Vergrösserung der Schneidkantenverrundung und/oder zu Ausbrüchen an der Schneidkante mit der Folge, dass die erforderliche Schnittgüte nicht erreicht wird.

Um also einerseits aus Verschleissgründen einen nicht zu geringen Keilwinkel und aus Gründen der hohen Oberflächengüte einen nicht zu grossen Keilwinkel einzusetzen, werden heutzutage praktisch ausschliesslich Hartmetalle für die Herstellung der Schneiden eingesetzt. Je nach Anwendung besitzen solche Schneiden Keilwinkel zwischen 45° und 60°.

Eine weitere Einflussgrösse zur Beeinflussung des Zerspanungsergebnisses ist der Achswinkel. Unter dem Achswinkel versteht man jenen Winkel, den die Schneidkante relativ zur Drehachse bzw. zu ihrer Drehbewegungsrichtung einnimmt. Durch den Einsatz eines Achswinkels entsteht ein sogenannt "gezogener" Schnitt, weil sich im Bereich der Oberflächenerzeugung nur ein Punkt auf der Schneidkante im Einsatz befindet. Dadurch werden die Holzfasern glatter durchtrennt, als wenn kein Achswinkel eingestellt ist, und es entsteht eine noch bessere Oberflächengüte.

Ein ähnlicher Effekt wie durch den Einsatz eines Achswinkels lässt sich auch durch eine bombierte Schneidkante (= Schneidkantenradius) erzielen. Dabei ist bereits eine vergleichsweise kleine, abgewickelte Bombierung zwischen 0.02 und 0.09 mm ausreichend, damit der gewünschte Effekt eintritt. Ausserdem wird durch die bombierte Schneide im Bereich der Schneidenüberlappung eine deutlich bessere Oberflächengüte erzeugt.

Bereits bekannt ist der Einsatz von auswechselbaren, quadratischen Schneidplatten, deren Schneidkanten bombiert sind und über deren Länge einen Schneidkantenradius aufweisen, der im Bereich zwischen 50 und 150 mm liegt. Solche auf dem Markt erhältlichen Schneidplatten weisen zudem einen Keilwinkel auf, der bei 60° liegt. Ein hoher Keilwinkel ist insbesondere deswegen erwünscht, weil der Verschleiss geringer und somit die Standzeit der Schneidplatte grösser ist. Der grosse Keilwinkel vermindert jedoch die Einsetzbarkeit der Schneiden auf kleineren Werkzeugdurchmessern. Bedingt durch die grössere Krümmung des Flugkreises, müssen die Schneiden mit höherem Freiwinkel eingesetzt werden. Ansonsten entstehen unerwünschte Brandmarken auf der Holzoberfläche, und zudem steigt die Gefahr eines Werkstattbrandes. Der Werkzeuggrenzdurchmesser für Schneiden mit einem Keilwinkel von 60° liegt daher etwa bei 80 mm. Bei kleineren Einsatzdurchmessern wird der Spanwinkel bedingt durch die höheren Freiwinkel zu klein, so dass keine optimale Zerspanung erfolgen kann.

Die FR-A-2702403A1 offenbart Schneidplatten mit der Dimension 14.5 mm x 14.5 mm, die zwecks Erzeugung einer Bombierung eine Fase von 1 bis 3° aufweisen. Der Keilwinkel der Schneidplatten liegt zwischen 35 bis 40° und vorzugsweise bei 37°. Im Vergleich zu den beschriebenen Schneidplatten sollen standardmässige Schneidplatten die Dimensionen 14 mm x 14 mm aufweisen. Zu beachten ist, dass gemäss der FR-A-2702403A1 zur Erzeugung der Bombierung eine Fase anstelle eines Schneidkantenradius verwendet wird. Dies hat den Nachteil, dass bei der Bearbeitung von Holzoberflächen noch sichtbare Striemen übrig bleiben können, was ästhetisch nicht erwünscht ist.

Die US-Patentanmeldung Nr. US2008050185A1 beschreibt ebenfalls quadratische Schneidplatten, die eine Schneidkantenlänge von 15 mm aufweisen. Die Abstände der an einem Werkzeug montierten Schneiden betragen zwischen 0.8 und 0.9 inch (20.32 mm und 22.86 mm) und die Überlappung der Schneidplatten beträgt zwischen 0.375 bis 0.425 inch (9.52 mm und 10.8 mm). Daraus folgt, dass die Schneiden eine Kantenlänge von wenigstens 15 mm haben. Die US2008050185A1 enthält im Übrigen keine Angaben darüber, ob die Schneidkanten der Schneiden bombiert sind oder nicht.

Die EP-A-1 442 852 offenbart einen Walzenfräser mit Wendeschneidplatten, die in Reihen am Umfang eines Walzenkörpers mit Spannuten angeordnet sind. Die Wendeschneidplatten aufeinanderfolgender Reihen sind auf Lücke angeordnet. Die Wendeschneidplatten haben eine quadratische Form und eine schwach gewölbte Oberseite. In der EP-A-1 442 852 finden sich keine Angaben zur Dimensionierung der Schneidplatten.

### Aufgabe

Es ist daher Aufgabe der Erfindung, ein Bearbeitungswerkzeug und eine Schneidplatte vorzuschlagen, mit welchen auch bei kleineren Werkzeugdurchmessern im Bereich kleiner 80 mm eine hohe Oberflächengüte erzeugt werden kann. Ein weiteres Ziel ist es, ein Bearbeitungswerkzeug zur Verfügung zu stellen, das im Vergleich zu bekannten Bearbeitungswerkzeugen eine höhere Arbeitsleistung bei sonst gleichbleibender Oberflächengüte ermöglicht.

### Beschreibung

Diese und weitere Ziele werden durch den Gegenstand gemäss Anspruch 1 erreicht. Vorteilhafte Ausgestaltungen des erfindungsgemässen Gegenstands sind in den Unteransprüchen definiert.

Die Erfindung betrifft ein Bearbeitungswerkzeug für die rotierende zerspanende Bearbeitung von Werkstoffen, insbesondere für Holz oder holzartige Werkstoffe, Kunststoffe und/oder Verbundwerkstoffe, Das Werkzeug besitzt mindestens eine in Umfangsrichtung angeordnete Reihe von einzelnen, in der Draufsicht im Wesentlichen quadratischen Schneidplatten mit bombierten Schneidkanten, die einen Keilwinkel aufweisen und in einem Achswinkel zur Drehachse angeordnet sind.

Erfindungsgemäss weisen die Schneidkanten der quadratischen Schneidplatten eine Länge grösser als 13 mm und kleiner als 15 mm, einen Schneidkantenradius von weniger als 50 mm, und einen Keilwinkel von weniger als 60° und grösser als 45° auf. Diese Schneidengeometrie hat den Vorteil, dass durch die Verkleinerung des Schneidenradiuses bei gleichbleibender abgewickelter Bombierung im Holz ein deutlich grösserer Achswinkel zum Einsatz gelangen kann. Schlussendlich eignet sich die verbesserte Schneidengeometrie im gesamten Durchmesserbereich der Werkzeuge für eine verbesserte Positionierung der Schneide, verbesserte Schnittwinkel wie Span-, Keil, Frei- und Achswinkel. Überraschenderweise kann dadurch eine deutliche verbesserte Oberflächengüte erreicht werden bei gleichbleibender Standzeit. Vorzugsweise ist der Keilwinkel zwischen 45° und 55° gross.

Ein weiterer Vorteil ist, dass durch den im Vergleich zu bekannten Schneidengeometrien kleineren Keilwinkel deutlich höhere Span- und Freiwinkel eingestellt werden können. Dies sorgt für eine optimalere Zerspanung, weniger Reibung und Wärme. Zur Überraschung des Erfinders verringerten sich trotz des kleineren Keilwinkels die Standzeiten der Werkzeuge nicht.

Vorteilhaft weisen die Schneidkanten der quadratischen Schneidplatten eine Länge grösser als 13,5 mm und kleiner als 14 mm, einen Schneidkantenradius von weniger als 48 mm, und vorzugsweise einen Keilwinkel von weniger als 58° auf. Untere Grenzwerte für den Keilwinkel liegen bei Schneidplatten mit einer Kantenlängen zwischen 13 mm und 15 mm bei 45°, vorzugsweise bei 48° und besonders bevorzugt bei 50°. Durch die kürzere Schneidkantenlänge und den kleineren Schneidkantenradius können mit der verbesserten Schneidengeometrie Werkzeugdurchmesser von deutlich kleiner 80 mm realisiert werden.

Besonders vorteilhaft hat sich herausgestellt, wenn die Schneidkanten der quadratischen Schneidplatten eine Länge zwischen 13,7 mm und 13,9 mm, einen Schneidkantenradius von weniger als 45 mm und vorzugsweise gleich oder grösser als 40 mm, und vorzugsweise einen Keilwinkel von weniger als 54°, bevorzugt ungefähr 53°, aufweisen. Dabei soll unter "ungefähr" ±0,5 Grad verstanden werden. Mit Schneidplatten, deren Schneidengeometrie den vorerwähnten Kriterien entsprechen, lässt sich eine hervorragende Oberflächengüte erzielen.

Gemäss einer bevorzugten Ausführungsform ist die Schneidkante bei einer Projektion in radialer Richtung auf eine die Längsachse des Werkzeugs enthaltende Projektionsebene in einem Achswinkel zwischen 18 und 32 Grad, vorzugsweise 20 und 30, und besonders bevorzugt zwischen 22 und 28 Grad relativ zur Werkzeuglängsachse geneigt. Die Einstellung eines Achswinkels zwischen 22 und 28 Grad relativ zur Werkzeuglängsachse hat sich in Verbindung mit den Schneidplatten der oben erwähnten Schneidengeometrie als optimal erwiesen.

Erfindungsgemäß sind in Umfangsrichtung wenigstens zwei Reihen von Schneidplatten vorgesehen, wobei die Schneidplatten der beiden Reihen in Drehrichtung des Werkzeuges gesehen sich zumindest partiell überlappen. Dies hat den Vorteil, dass durch den unterbrochenen Schnitt eine geringere Zerspanungsleistung benötigt wird, wie wenn die zwei Reihen mit einer nicht unterbrochenen Schneidkante ausgestaltet werden.

Das Werkzeug weist vorzugsweise mindestens eine spiralförmige Vertiefung auf mit mehreren nebeneinander angeordneten Sitzen für die Aufnahme von Schneidplatten. Eine solche Anordnung hat sich in der Praxis bewährt. Dabei ist der in Achsrichtung des Werkzeugs gemessene Abstand zweier benachbarter Sitze kleiner als die doppelte Schneidkantenlänge der Schneidplatten. Dadurch kann mittels der zweiten Schneidplattenreihe und darin einem entsprechenden axialen Versatz der quadratischen Schneidplatten, ein geschlossener Schnitt wie mit einer durchgängigen Schneidplatte erzeugt werden.

Eine besonders vorteilhafte Ausführungsform des Bearbeitungswerkzeug sieht vor, dass eine der beiden äussersten Schneidplatten bezüglich der in der Mantelfläche verlaufenden Längsachse um den Achswinkel -λ gedreht ist, sodass die äussersten und alle nachfolgenden Schneidplatten 17 beim Schneidvorgang entweder nach aussen oder nach innen ziehen, d.h. beim Schneiden tritt eine nach aussen oder nach innen auf die Holzfasern wirkende Kraftkomponente auf.

Gegenstand der vorliegenden Erfindung ist auch eine im Wesentlichen quadratische Schneidplatte für ein Bearbeitungswerkzeug für die rotierende, zerspanende Bearbeitung von Werkstoffen, insbesondere für Holz oder holzartige Werkstoffe, Kunststoffe und/oder Verbundwerkstoffe, mit einer Vorderfläche und einer bombierten Spanfläche, wobei die Vorderfläche mit der bombierten Spanfläche einen stumpfen Winkel einnimmt. Die erfindungsgemässe Schneidplatte ist dadurch charakterisiert, dass die Schneidkanten der quadratischen Schneidplatten eine Länge grösser als 13 mm und kleiner als 15 mm, einen Schneidkantenradius von weniger als 50 mm, und einen Keilwinkel von weniger als 60° und grösser als 45° aufweisen. Die Vorteile einer Schneidplatte mit einer solchen Schneidengeometrie wurden bereits weiter oben diskutiert.

Ein weiterer Gegenstand der vorliegenden Erfindung ist ein System umfassend ein Werkzeug für die rotierende zerspanende Bearbeitung von Werkstoffen wie Holz oder holzartige Werkstoffe, Kunststoffe und/oder Verbundwerkstoffe und eine Schneidplatte gemäss den Ansprüchen 11 bis 14.

Ausführungsbeispiele der Erfindung werden nun unter Bezugnahme auf die beiliegenden Figuren näher im Detail beschrieben.
- Fig. 1: Eine Seitenansicht eines ersten Ausführungsbeispiels eines erfindungsgemässen Bearbeitungswerkzeugs für die rotierende Bearbeitung eines Werkstücks mit einer Mehrzahl in einem spiralförmigen Vertiefung angeordneten Schneidplatten;
- Fig. 2: Eine Stirnansicht des Ausführungsbeispiels von Fig. 1;
- Fig. 3: Eine erfindungsgemässe Schneidplatte in einer Unteransicht und im Schnitt;
- Fig. 4: Schematisch die Schneidplatte von Fig. 3, wenn sie tangential am Umfang eines zylindrischen Bearbeitungswerkzeugs positioniert ist;
- Fig. 5: Schematisch die Schneidplatte von Fig. 3, wenn diese um den Freiwinkel α am Umfang des Bearbeitungswerkzeugs abgekippt ist;
- Fig. 6: Schematisch die geometrische Positionierung der Schneidplatte an einem zylindrischen Bearbeitungswerkzeug;
- Fig. 7: Schematisch ein zweites Ausführungsbeispiel eines zylindrischen Bearbeitungswerkzeugs zum Fälzen mit hintereinander angeordneten Reihen von Schneidplatten, wobei zur besseren Veranschaulichung die Hälfte der Mantelfläche als abgewickelte Fläche dargestellt ist ;
- Fig. 8: Schematisch ein drittes Ausführungsbeispiel eines Bearbeitungswerkzeugs für das Nuten;
- Fig. 9: Schematisch ein viertes Ausführungsbeispiel eines Bearbeitungswerkzeugs für das Fügen.

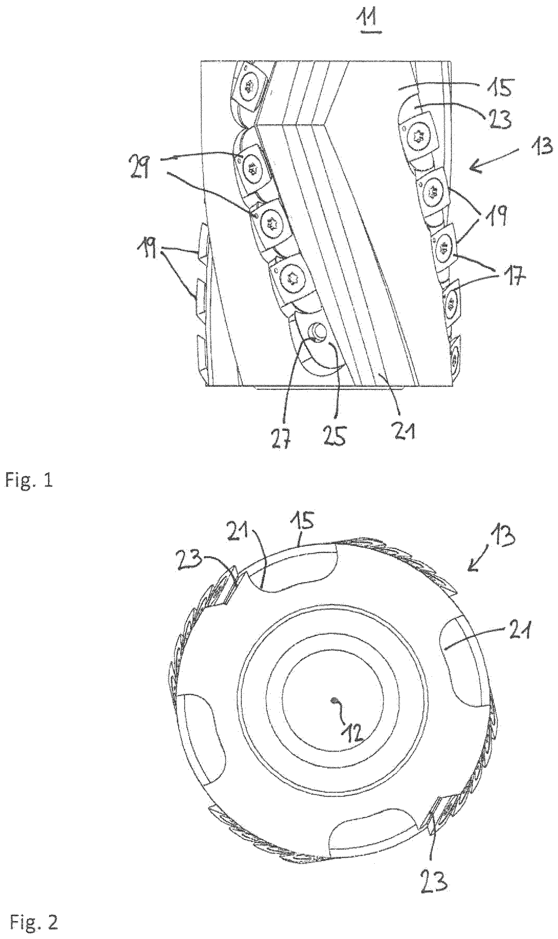

Die Figuren 1 und 2 zeigen in perspektivischer Ansicht ein erstes Ausführungsbeispiel eines erfindungsgemäss ausgeführten Bearbeitungswerkzeuges 11 für die zerspanende Bearbeitung von Werkstoffen, insbesondere für Holz oder holzartige Werkstoffe wie beschichtete oder unbeschichtete Spanplatten, Hartfaserplatten oder dergleichen, Das Bearbeitungswerkzeug 11 kann aber auch für andere Werkstoffe wie Faserverbundkunststoffe oder dergleichen zweckmässig sein. Das Bearbeitungswerkzeug 11 ist als Spiralfräser ausgestaltet und für die Montage auf einem nicht dargestellten Werkzeugschaft vorgesehen. Im Betrieb wird das Bearbeitungswerkzeug 11 um eine Drehachse 12 drehend angetrieben (Fig. 1).

Der Grundkörper 13 des Bearbeitungswerkzeuges 11 ist im Wesentlichen zylindrisch ausgeführt, wobei auf dessen zylindrischer Umfangsfläche 15 eine Vielzahl von als Umfangsschneiden ausgebildeten Schneidplatten 17 mit Schneidkanten 19 angeordnet ist. Die Schneidplatten 17 sind in mindestens einer, bevorzugt in mindestens zwei oder mehr in Umfangsrichtung angeordneten Reihen angeordnet, wobei sich diese einzelnen Reihen bzw. Gruppen in der Axialrichtung gegeneinander überlappen, um so ein gleichmässiges Zerspanungsergebnis zu erzielen.

Bei dem in der Fig. 1 dargestellten erfindungsgemäßen Bearbeitungswerkzeug 11 ist in der Umfangsfläche 15 ein spiralförmiger, halbrunder oder U-förmig ausgebildeter Spankanal 21 angrenzend an eine ebenfalls spiralförmige Vertiefung 23 ausgebildet. In der spiralförmigen Vertiefung 23 sind mehrere Plattensitze 25 im Abstand voneinander angeordnet. Im Zentrum jedes Plattensitzes 25 ist ein Schraubenkanal 27 für die Aufnahme einer Befestigungsschraube 29 vorgesehen.

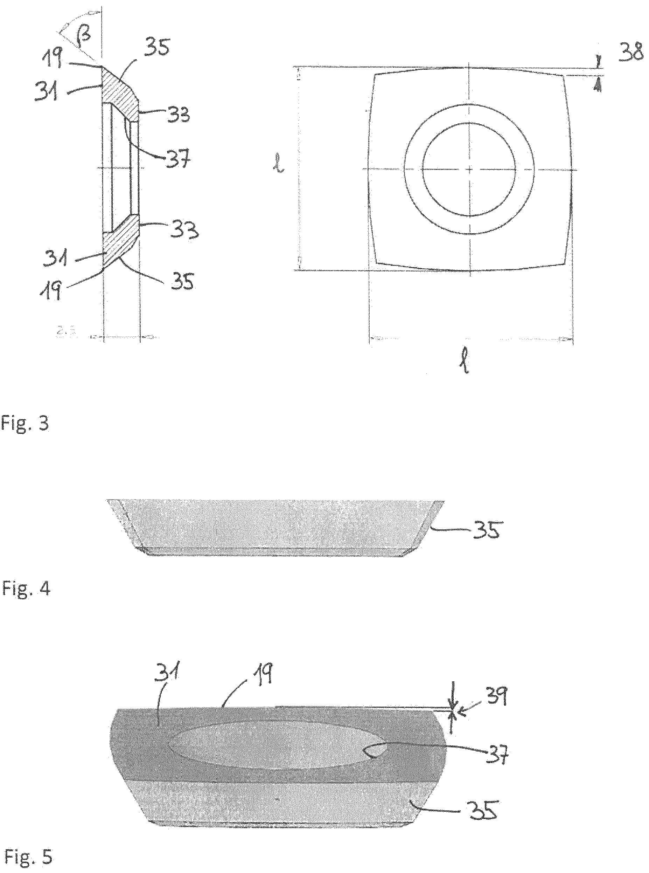

In Fig. 3 sind rechts eine Unteransicht der Schneidplatte 17 und links die Schneidplatte 17 im Schnitt dargestellt. Die Schneidplatte 17 hat einem im Wesentlichen quadratischen Grundriss mit der Kantenlänge I mit einer planen Vorderfläche 31 und einer flächenmässig kleineren und ebenfalls planen Auflagefläche 33. Zwischen der Vorderfläche 31 und der Auflagefläche 33 ist jeweils an den Seitenkanten ein Schneidkeil mit den Schneidkanten 19 und dem Keilwinkel β ausgebildet. Dabei bezeichnet die Bezugsnummer 35 die bombierte Spanfläche, und die Vorderfläche 31 ist die Freifläche. Wie aus erfindungsgemässen Fig. 3 ersichtlich ist, sind die Schneidkanten 19 nicht gerade, sondern bombiert, d.h. mit einem bestimmten Schneidkantenradius, der vorzugsweise kleiner als 45 mm, ausgebildet. In der Mitte der Schneidplatte 17 befindet sich ein konisches Aufnahmeloch 37, das der Aufnahme des Kopfes der Befestigungsschraube 29 dient. Betrachtet man eine Schneidplatte mit bombierten Schneidkanten von der Seite in einer Richtung, die in der Ebene der Vorderfläche liegt, so wird die bombierte Schnittkante als Gerade wahrgenommen (Fig. 4). Sobald die Schneide jedoch um einen Freiwinkel α abgekippt wird, erscheint die bombierte Schneidkante 19 als elliptische Abwicklung mit einer bestimmten Restbombierung 39, die kleiner als die tatsächliche Bombierung der Schneidkante ist (Fig. 5). Würde die Schneidplatte um 90° abgekippt (Blickwinkel senkrecht zur Vorderfläche wie in Fig. 3), dann wäre die volle Bombierung 38 sichtbar. Für die Ausgestaltung des Bearbeitungswerkzeugs bedeutet dies, dass durch eine entsprechende Neigung des Plattensitzes relativ zur Umfangsfläche jeweils eine gewünschte, optimale Restbombierung einstellbar ist.

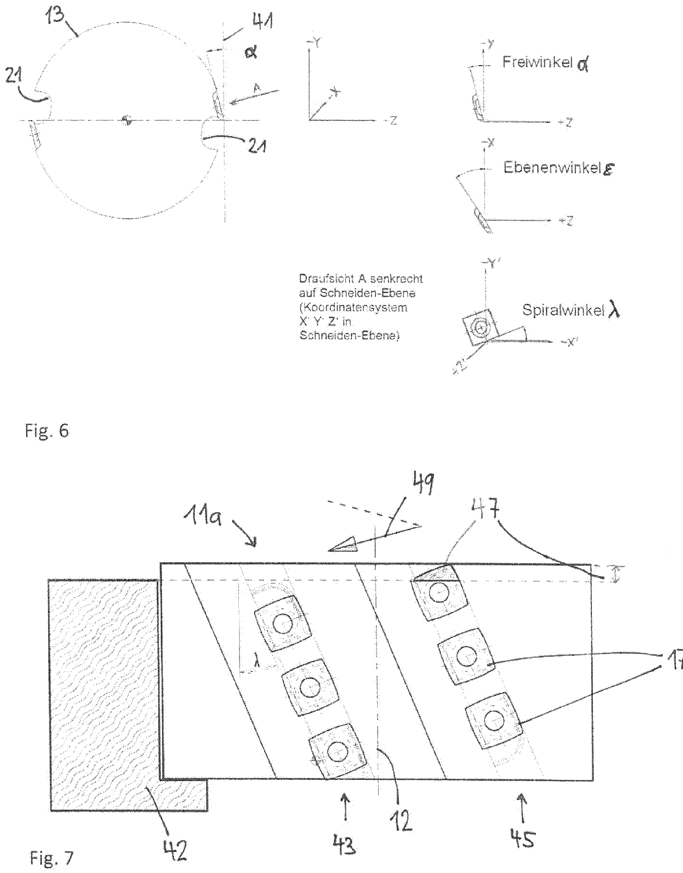

In Fig. 6 ist die Anordnung der Schneidplatte 17 an einem zylindrischen Werkzeug 11 beispielhaft dargestellt. Wie aus der Fig. 6 ersichtlich ist, ist die Schneidplatte 17 gegenüber einer an den Werkzeugumfang gelegten Tangente 41 um einen Freiwinkel α abgekippt. Gemäss Ausführungsbeispiel ist die Schneidplatte in der Freiwinkelebene um den Achswinkel λ in die gefräste Spiralnute 23 gedreht und die beiden Eckpunkte der Schneide (Schnittpunkte der bombierten Schnittkanten) gleichzeitig so um einen Ebenenwinkel ε abgekippt, dass diese wieder auf der gleichen "Linie" resp. Flugkreis zu liegen kommen. Bei einem zylindrischen Werkzeug ist diese "Linie" derselbe Flugkreisdurchmesser und bei einem konischen Werkzeug liegen die Eckpunkte der Schneide auf der entsprechenden "Faswinkel-Linie" des Werkzeuges.

Fig. 7 zeigt beispielhaft ein erfindungsgemässes Bearbeitungswerkzeug 11a, wie es für das Fälzen eines Holzwerkstücks eingesetzt werden kann. Zur besseren Veranschaulichung ist eine Hälfte des Zylindermantels als abgewickelte Fläche dargestellt, d.h. in der Ebene ausgebreitet. Das Bearbeitungswerkzeug besitzt zwei in Umfangsrichtung hintereinander angeordnete Reihen 43,45 von Schneidplatten 17, die, wie aus Fig. 7 erkennbar ist, versetzt zueinander angeordnet sind. Durch das Abdrehen der Schneide um den Achswinkel sowie durch das Freistellen der Schneide durch das Abkippen um den Freiwinkel, entsteht auf einer Seite der Schnittkante ein dreiecksförmiger "toter" Bereich 47, also ein Bereich der Schneide, welcher nicht am aktuellen Zerspanungsprozess beteiligt ist. Das Fälz-Bearbeitungswerkzeug 11a ist um einen "toten" Bereich 47 breiter als die maximale Falztiefe, ansonsten würde die oberste Schneidplatte 17 der zweiten Reihe 45 über den Werkzeugkörper hinausragen. Mit dem Drehrichtungspfeil 49 ist die Rotationsrichtung angezeigt, und λ bezeichnet den Achswinkel.

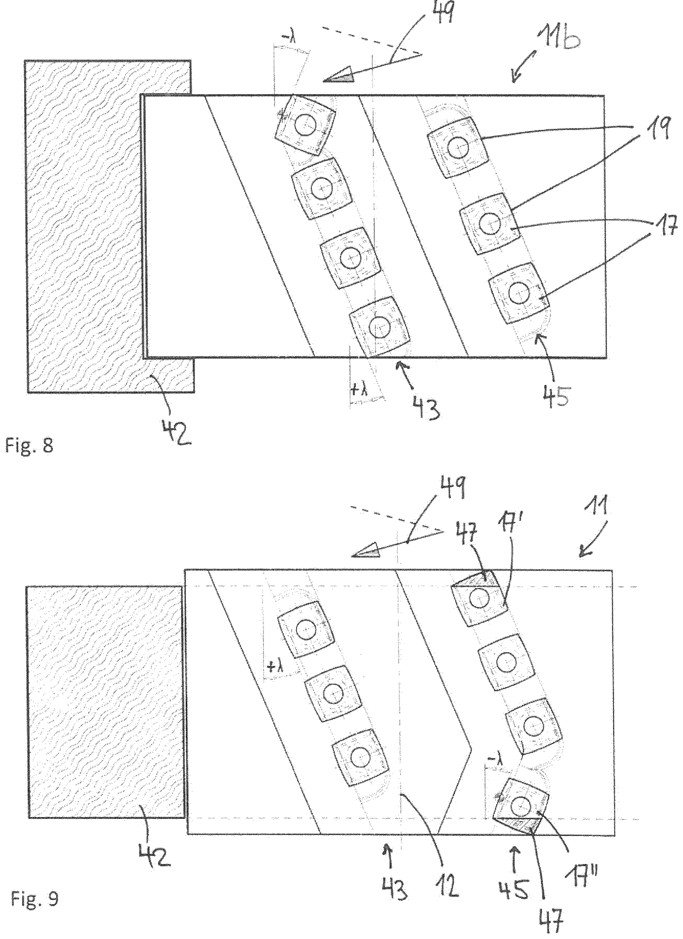

In Fig. 8 ist ein speziell für das Nuten verwendbares Bearbeitungswerkzeug gezeigt.

Das Besondere an diesem Bearbeitungswerkzeug 11b ist, dass die Schneidplatten 17 so aufgeteilt und angeordnet sind, dass auf beiden Körperseiten kein "toter" Bereich vorhanden ist. Dies kann realisiert werden, indem auf beiden Seiten zusätzlich Vorschneider platziert sind, sodass der Fräser auch als "Nuter" eingesetzt werden kann. Gemäss Ausführungsbeispiel besitzt das Nutwerkzeug 11b eine erste Reihe 43 mit 4 Schneidplatten 17 und eine zweite Reihe 45 mit 3 Schneidplatten 17. Dabei ist die Schneidplatte der ersten Reihe bezüglich der Längsachse derart um den Achswinkel λ gedreht, sodass die erste und alle nachfolgenden Schneidplatten 17 beim Schneidvorgang nach aussen ziehen.

In Fig. 9 ist ein speziell für das Fügen verwendbares Bearbeitungswerkzeug 11 gezeigt, welches mit demjenigen von Fig. 1 identisch ist. Das Besondere an diesem Bearbeitungswerkzeug ist, dass die Schneidplatten bezüglich der Längsachse derart um den Achswinkel λ gedreht sind, dass auf beiden Körperseiten mindestens eine Schneide 17' resp. 17" nach "innen" zieht und somit die Holzfasern in Richtung bearbeitetes Holzwerkstück gedrückt werden. Dadurch entsteht auf beiden Seiten eine ausrissfreie Schnittkante. Durch diese spezielle Schneidenanordnung und das Freistellen der Schneide durch das Abkippen um den Freiwinkel entsteht oberhalb bzw. unterhalb der Schnittkante ein dreiecksförmiger "toter" Bereich, also ein Bereich der Schneide, welcher nicht am aktuellen Zerspanungsprozess beteiligt ist. Damit die Schneide seitlich nicht aus dem Werkzeug ragt, muss das Werkzeug um mindestens diesen Bereich verbreitert sein, um einerseits einer Verletzungsgefahr des Anwenders vorzubeugen und andererseits die Schneide vor Beschädigung zu schützen.

Zusammengefasst kann folgendes festgehalten werden: Die Schneidplatte weist beispielhaft einen trapezförmigen Querschnitt mit einem an der Schneidkante ausgebildeten Keilwinkel β auf, wobei der Keilwinkel β von einer bombierten Spanfläche und einer Freifläche der Schneide eingeschlossen wird. Der Keilwinkel β wird noch um einen Freiwinkel α und einen Spanwinkel γ zu insgesamt 90° ergänzt. Der Keilwinkel β ist nach der Erfindung < 60° und liegt in einem Bereich zwischen 45° und 58°, vorzugsweise zwischen 52° und 54°, bevorzugt ungefähr 53°. Durch die verbesserte Schneidengeometrie können Bearbeitungswerkzeuge mit kleinerem Durchmesser realisiert werden.

### Legende

- 11: Bearbeitungswerkzeug
- 12: Drehachse
- 13: Grundkörper
- 15: Umfangsfläche
- 17: Schneidplatte
- 19: Schneidkante der Schneidplatte
- 21: Spankanal
- 23: Spiralnute
- 25: Plattensitz
- 27: Schraubenkanal
- 29: Befestigungsschraube
- 31: Vorderfläche oder Freiwinkelfläche
- 33: Auflagefläche
- 35: Bombierte Spanfläche
- 37: Aufnahmeloch
- 38: Volle Bombierung
- 39: Restbombierung
- 41: Tangente
- 42: Holzwerkstück
- 43,45: Reihen von Schneidplatten
- 47: "toter" Bereich
- 49: Drehrichtungspfeil

## Patentansprüche

1. Bearbeitungswerkzeug (11,11a,11b) für die rotierende zerspanende Bearbeitung von Werkstoffen (42), insbesondere für Holz oder holzartige Werkstoffe, Kunststoffe und/oder Verbundwerkstoffe, **dadurch gekennzeichnet, dass** das Bearbeitungswerkzeug auch mit einem spiralförmigen, halbrunden oder U-förmig ausgebildeten Spankanal 21 und angrenzend daran einer spiralförmigen Vertiefung (23) mit mehreren nebeneinander angeordneten Sitzen (25) für die Aufnahme von Schneidplatten und darauf in Umfangsrichtung angeordnet eine Reihe von einzelnen, in der Draufsicht im Wesentlichen quadratischen Schneidplatten (17) mit bombierten Schneidkanten (19), die einen Keilwinkel aufweisen und in einem Achswinkel λ zur Drehachse (12) angeordnet sind,
wobei die Schneidkanten (19) der quadratischen Schneidplatten (17) eine Länge grösser als 13 mm und kleiner als 15 mm, einen Schneidkantenradius von weniger als 50 mm, und einen Keilwinkel β grösser als 45° und weniger als 60° aufweisen.

2. Werkzeug nach Anspruch 1, **dadurch gekennzeichnet, dass** die Schneidkanten (19) der quadratischen Schneidplatten eine Länge grösser als 13,5 mm und kleiner als 14 mm, einen Schneidkantenradius von weniger als 48 mm aufweisen.

3. Werkzeug nach Anspruch 1, **dadurch gekennzeichnet, dass** die Schneidkanten (19) der quadratischen Schneidplatten eine Länge zwischen 13,7 mm und 13,9 mm, einen Schneidkantenradius von weniger als 45 mm, und einen Keilwinkel β von weniger als 54° aufweisen.

4. Werkzeug nach einem der Ansprüche 1 bis 3, **dadurch gekennzeichnet, dass** der Keilwinkel β ≥ 48 ° und besonders bevorzugt ≥ 52° ist.

5. Werkzeug nach Anspruch 1, **dadurch gekennzeichnet, dass** die Schneidplatte (17) besonders bevorzugt eine Länge von 13.8 mm, einen Schneidkantenradius von 40 mm und einen Keilwinkel β von 53° aufweist.

6. Werkzeug nach einem der Ansprüche 1 bis 5, **dadurch gekennzeichnet, dass** die Schneidkante (19) bei einer Projektion in radialer Richtung auf eine die Längsachse des Werkzeugs enthaltende Projektionsebene in einem Achswinkel λ zwischen 18 und 32 Gradrelativ zur Werkzeuglängsachse geneigt ist.

7. Werkzeug nach einem der Ansprüche 1 bis 6, **dadurch gekennzeichnet, dass** die Schneidkante (19) bei einer Projektion in radialer Richtung auf eine die Längsachse des Werkzeugs enthaltende Projektionsebene in einem Achswinkel λ zwischen 20 und 30 Grad relativ zur Werkzeuglängsachse geneigt ist.

8. Werkzeug nach einem der Ansprüche 1 bis 7, **dadurch gekennzeichnet, dass** die Schneidkante (19) bei einer Projektion in radialer Richtung auf eine die Längsachse des Werkzeugs enthaltende Projektionsebene in einem Achswinkel λ zwischen 22 und 28 Grad relativ zur Werkzeuglängsachse geneigt ist.

9. Werkzeug nach einem der Ansprüche 1 bis 8, **dadurch gekennzeichnet, dass** die Schneidplatte (17) einen solchen Ebenenwinkel ε einnimmt, dass die einander gegenüberliegenden Eckpunkte der Schneidkante (19) auf dem gleichen Flugkreisradius liegen.

10. Werkzeug nach einem der Ansprüche 1 bis 9, **dadurch gekennzeichnet, dass** in Umfangsrichtung wenigstens zwei Reihen (43,45) von Schneidplatten (17) vorgesehen sind, wobei die Schneidplatten der beiden Reihen (43,45) sich zumindest partiell überlappen.

11. Werkzeug nach einem der Ansprüche 1 bis 10, **dadurch gekennzeichnet, dass** im Zentrum jedes Sitzes (25) ein Schraubenkanal (27) für die Aufnahme einer Befestigungsschraube (29) und in der Mitte der Schneidplatte (17) ein konisches Aufnahmeloch (37) für den Kopf der Befestigungsschraube (29) vorgesehen ist.

12. Werkzeug nach einem der Ansprüche 1 bis 11, **dadurch gekennzeichnet, dass** der in Achsrichtung des Werkzeugs gemessene Abstand zweier benachbarter Sitze kleiner als die doppelte Schneidkantenlänge der Schneidplatten ist.

13. Werkzeug nach einem der Ansprüche 1 bis 12, **dadurch gekennzeichnet, dass** der Werkzeugdurchmesser kleiner als 80 mm ist.

14. Werkzeug nach einem der Ansprüche 1 bis 13, **dadurch gekennzeichnet, dass** angrenzend an die spiralförmige Vertiefung (23) ein halbrunder oder U-förmig ausgebildeter Spankanal (21) ausgebildet ist.

15. Schneidplatte (17) für ein Bearbeitungswerkzeug für die rotierende, zerspanende Bearbeitung von Werkstoffen (42), insbesondere für Holz oder holzartige Werkstoffe, Kunststoffe und/oder Verbundwerkstoffe, mit einer Vorderfläche (31) und einer bombierten Spanfläche (35), wobei die Vorderfläche (31) mit der bombierten Spanfläche (35) einen stumpfen Winkel einnimmt und in der Mitte der Schneidplatte (17) ein konisches Aufnahmeloch (37) für den Kopf der Befestigungsschraube (29) vorgesehen ist,
**dadurch gekennzeichnet,**
**dass** die Schneidkanten (19) der quadratischen Schneidplatten (19) eine Länge grösser als 13 mm und kleiner als 15 mm, einen Schneidkantenradius von weniger als 50 mm, und einen Keilwinkel β grösser als 45° und weniger als 60° aufweisen.

16. Schneidplatte nach Anspruch 15, **dadurch gekennzeichnet, dass** die Schneidkanten (19) der quadratischen Schneidplatten eine Länge grösser als 13,5 mm und kleiner als 14 mm und einen Schneidkantenradius von weniger als 48 mm aufweisen.

17. Schneidplatte nach Anspruch 15, **dadurch gekennzeichnet, dass** die Schneidkanten (19) der quadratischen Schneidplatten (17) eine Länge zwischen 13,7 mm und 13,9 mm, einen Schneidkantenradius von weniger als 45 mm, und einen Keilwinkel β von weniger als 54° aufweisen.

18. Schneidplatte nach einem der Ansprüche 15 bis 17, **dadurch gekennzeichnet, dass** der Keilwinkel β ≥ 48 ° und besonders bevorzugt ≥ 52° ist.

19. Schneidplatte nach Anspruch 18, **dadurch gekennzeichnet, dass** die Schneidplatte (17) besonders bevorzugt eine Länge von 13.8 mm, einen Schneidkantenradius von 40 mm und einen Keilwinkel β von 53° aufweist.

20. Werkzeugsystem umfassend ein Werkzeug gemäss einem der Ansprüche 1 bis 14 und einer Schneidplatte gemäss einem der Ansprüche 15 bis 19.

## Claims

1. A machining tool (11, 11a, 11b) for rotatively machining materials (42), particularly for wood or wood-like materials, plastics and/or composite materials, **characterized in that** the machining tool is also designed with a spiral-shaped, semicircular or U-shaped chip channel (21), an adjacent spiral-shaped depression (23) with several adjacently arranged seats (25) for receiving cutting plates and, arranged thereon in the circumferential direction, a row of individual cutting plates (17) that essentially are square in a top view and have cambered cutting edges (19), with said cutting edges having a wedge angle and being arranged at an axial angle λ to the rotational axis (12),
wherein the cutting edges (19) of the square cutting plates (17) have a length that is greater than 13 mm and smaller than 15 mm, a cutting edge radius that is smaller than 50 mm and a wedge angle β that is greater than 45° and smaller than 60°.

2. The tool according to claim 1, **characterized in that** the cutting edges (19) of the square cutting plates have a length that is greater than 13.5 mm and smaller than 14 mm and a cutting edge radius that is smaller than 48 mm.

3. The tool according to claim 1, **characterized in that** the cutting edges (19) of the square cutting plates have a length between 13.7 mm and 13.9 mm, a cutting edge radius that is smaller than 45 mm and a wedge angle β that is smaller than 54°.

4. The tool according to one of claims 1 to 3, **characterized in that** the wedge angle β is ≥ 48°, particularly ≥ 52°.

5. The tool according to claim 1, **characterized in that** the cutting plate (17) particularly has a length of 13.8 mm, a cutting edge radius of 40 mm and a wedge angle β of 53°.

6. The tool according to one of claims 1 to 5, **characterized in that** the cutting edge (19) is inclined relative to the longitudinal tool axis by an axial angle λ between 18 and 32 degrees in a radial projection on a projection plane containing the longitudinal axis of the tool.

7. The tool according to one of claims 1 to 6, **characterized in that** the cutting edge (19) is inclined relative to the longitudinal tool axis by an axial angle λ between 20 and 30 degrees in a radial projection on a projection plane containing the longitudinal axis of the tool.

8. The tool according to one of claims 1 to 7, **characterized in that** the cutting edge (19) is inclined relative to the longitudinal tool axis by an axial angle λ between 22 and 28 degrees in a radial projection on a projection plane containing the longitudinal axis of the tool.

9. The tool according to one of claims 1 to 8, **characterized in that** the cutting plate (17) assumes such a plane angle ε that the opposing corner points of the cutting edge (19) lie on the same cutting circle radius.

10. The tool according to one of claims 1 to 9, **characterized in that** at least two rows (43, 45) of cutting plates (17) are provided in the circumferential direction, wherein the cutting plates of the two rows (43, 45) overlap at least partially.

11. The tool according to one of claims 1 to 10, **characterized in that** a screw channel (27) for receiving a fastening screw (29) is provided in the center of each seat (25) and a conical receiving hole (37) for the head of the fastening screw (29) is provided in the center of the cutting plate (17).

12. The tool according to one of claims 1 to 11, **characterized in that** the distance between two adjacent seats measured in the axial direction of the tool is smaller than twice the cutting edge length of the cutting plates.

13. The tool according to one of claims 1 to 12, **characterized in that** the tool diameter is smaller than 80 mm.

14. The tool according to one of claims 1 to 13, **characterized in that** a semicircular or U-shaped chip channel (21) is formed adjacent to the spiral-shaped depression (23).

15. A cutting plate (17) for a machining tool for rotatively machining materials (42), particularly for wood or wood-like materials, plastics and/or composite materials, wherein said cutting plate has a front face (31) and a cambered cutting face (35), wherein the front face (31) forms an obtuse angle with the cambered cutting face (35), and wherein a conical receiving hole (37) for the head of a fastening screw (29) is provided in the center of the cutting plate (17),
**characterized in**
**that** the cutting edges (19) of the square cutting plates (19) have a length that is greater than 13 mm and smaller than 15 mm, a cutting edge radius that is smaller than 50 mm and a wedge angle β that is greater than 45° and smaller than 60°.

16. The cutting plate according to claim 15, **characterized in that** the cutting edges (19) of the square cutting plates have a length that is greater than 13.5 mm and smaller than 14 mm and a cutting edge radius that is smaller than 48 mm.

17. The cutting plate according to claim 15, **characterized in that** the cutting edges (19) of the square cutting plates (17) have a length between 13.7 mm and 13.9 mm, a cutting edge radius that is smaller than 45 mm and a wedge angle β that is smaller than 54°.

18. The cutting plate according to one of claims 15 to 17, **characterized in that** the wedge angle β is ≥ 48°, particularly ≥ 52°.

19. The cutting plate according to claim 18, **characterized in that** the cutting plate (17) particularly has a length of 13.8 mm, a cutting edge radius of 40 mm and a wedge angle β of 53°.

20. A tool system comprising a tool according to one of claims 1 to 14 and a cutting plate according to one of claims 15 to 19.

## Revendications

1. Outil d'usinage (11, 11a, 11b) pour l'usinage rotatif par enlèvement de copeaux de matières (42), en particulier pour le bois ou matières ligneuses, des matières plastiques et/ou matériaux composites, **caractérisé en ce que** l'outil d'usinage possède également un conduit pour copeaux (21) constitué en forme de spirale, demi-rond ou en forme de U et contigüe à celui-ci une cavité en forme de spirale (23) avec plusieurs sièges (25) disposés les uns à côté des autres pour la réception de plaquettes de coupe et disposée dessus en direction périphérique, une rangée de plaquettes de coupe (17) individuelles, pour l'essentiel quadratiques en vue de dessus avec des arêtes de coupe (19) bombées, qui comportent un angle de tranchant et sont disposées dans un angle axial λ par rapport à l'axe de rotation (12),
sachant que les arêtes de coupe (19) des plaquettes de coupe quadratiques (17) comportent une longueur supérieure à 13 mm et inférieure à 15 mm, un rayon d'arête de coupe inférieur à 50 mm et un angle de tranchant β supérieur à 45° et inférieur à 60°.

2. Outil selon la revendication 1, **caractérisé en ce que** les arêtes de coupe (19) des plaquettes de coupe quadratiques comportent une longueur supérieure à 13,5 mm et inférieure à 14 mm et un rayon d'arête de coupe inférieur à 48 mm.

3. Outil selon la revendication 1, **caractérisé en ce que** les arêtes de coupe (19) des plaquettes de coupe quadratiques comportent une longueur se situant entre 13,7 mm et 13,9 mm, un rayon d'arête de coupe inférieur à 45 mm et un angle de tranchant β inférieur à 54°.

4. Outil selon l'une quelconque des revendications 1 à 3, **caractérisé en ce que** l'angle de tranchant β ≥ 48° et en particulier de préférence ≥ 52°.

5. Outil selon la revendication 1, **caractérisé en ce que** la plaquette de coupe (17) comporte en particulier de préférence une longueur de 13,8 mm, un rayon d'arête de coupe de 40 mm et un angle de tranchant β de 53°.

6. Outil selon l'une quelconque des revendications 1 à 5, **caractérisé en ce que** l'arête de coupe (19) dans une projection en direction radiale sur un plan de projection contenant l'axe longitudinal de l'outil est inclinée dans un angle axial λ entre 18 et 32 degrés par rapport à l'axe longitudinal d'outil.

7. Outil selon l'une quelconque des revendications 1 à 6, **caractérisé en ce que** l'arête de coupe (19) dans une projection en direction radiale sur un plan de projection contenant l'axe longitudinal de l'outil est inclinée dans un angle axial λ entre 20 et 30 degrés par rapport à l'axe longitudinal d'outil.

8. Outil selon l'une quelconque des revendications 1 à 7, **caractérisé en ce que** l'arête de coupe (19) dans une projection en direction radiale sur un plan de projection contenant l'axe longitudinal de l'outil est inclinée dans un angle axial λ entre 22 et 28 degrés par rapport à l'axe longitudinal d'outil.

9. Outil selon l'une quelconque des revendications 1 à 8, **caractérisé en ce que** la plaquette de coupe (17) forme un angle de plan ε tel que les points angulaires opposés de l'arête de coupe (19) se situent sur le même rayon de cercle de coupe.

10. Outil selon l'une quelconque des revendications 6 à 9, **caractérisé en ce qu'**au moins deux rangées (43, 45) de plaquettes de coupe (17) sont prévues en direction périphérique, sachant que les plaquettes de coupe des deux rangées (43, 45) se chevauchent au moins en partie.

11. Outil selon l'une quelconque des revendications 1 à 10, **caractérisé en ce qu'**un conduit de vis (27) pour le logement d'une vis de fixation (29) est prévu au centre de chaque siège (25) et un trou de réception conique (37) est prévu au centre de la plaquette de coupe (17) pour la tête de la vis de fixation (29).

12. Outil selon l'une quelconque des revendications 1 à 11, **caractérisé en ce que** l'intervalle mesurée dans la direction axiale de l'outil entre deux sièges voisins est plus petit que la double longueur d'arête de coupe des plaquettes de coupe.

13. Outil selon l'une quelconque des revendications 1 à 12, **caractérisé en ce que** le diamètre d'outil est inférieur à 80 mm.

14. Outil selon l'une quelconque des revendications 1 à 13, **caractérisé en ce qu'**un conduit pour copeaux (21) constitué demi-rond ou en forme de U est constitué contigu à la cavité (23) en forme de spirale.

15. Plaquette de coupe (17) pour un outil d'usinage pour l'usinage rotatif par enlèvement de copeaux de matières (42), en particulier pour le bois ou matières ligneuses, matières plastiques et/ou matériaux composites, avec une surface avant (31) et une surface d'attaque bombée (35), sachant que la surface avant (31) avec la surface d'attaque bombée (35) forme un angle obtus et un trou de réception conique (37) pour la tête de la vis de fixation (29) est prévu au centre de la plaquette de coupe (17),
**caractérisée en ce que**
les arêtes de coupe (19) des plaquettes de coupe quadratiques (19) comportent une longueur supérieur à 13 mm et inférieure 15 mm, un rayon d'arête de coupe inférieur à 50 mm et un angle de tranchant β supérieur à 45° et inférieur à 60°.

16. Plaquette de coupe selon la revendication 15, **caractérisée en ce que** les arêtes de coupe (19) des plaquettes de coupe quadratiques comportent une longueur supérieure à 13,5 mm et inférieure à 14 mm et un rayon d'arête de coupe inférieur à 48 mm.

17. Plaquette de coupe selon la revendication 15, **caractérisée en ce que** les arêtes de coupe (19) des plaquettes de coupe quadratiques (17) comportent une longueur se situant entre 13,7 mm et 13,9 mm, un rayon d'arête de coupe inférieur à 45 mm et un angle de tranchant β inférieur à 54°.

18. Plaquette de coupe selon l'une quelconque des revendications 15 à 17, **caractérisée en ce que** l'angle de tranchant β ≥ 48° et en particulier de préférence ≥ 52°.

19. Plaquette de coupe selon la revendication 18, **caractérisée en ce que** la plaquette de coupe (17) comporte en particulier de préférence une longueur de 13,8 mm, un rayon d'arête de coupe de 40 mm et un angle de tranchant β de 53°.

20. Système d'outil comprenant un outil selon l'une quelconque des revendications 1 à 14 et une plaquette de coupe selon l'une quelconque des revendications 15 à 19.
